Europäisches Patentamt

European Patent Office

Office européen des brevets

(11) Veröffentlichungsnummer: **0 343 491 B1**

(19)

(12) **EUROPÄISCHE PATENTSCHRIFT**

(45) Veröffentlichungstag der Patentschrift: **23.06.93**

(21) Anmeldenummer: **89108830.4**

(22) Anmeldetag: **17.05.89**

(51) Int. Cl.⁵: **B32B 27/30**, B32B 17/10

(54) **Mehrschichtige Oberflächenfolie.**

(30) Priorität: **21.05.88 DE 3817479**

(43) Veröffentlichungstag der Anmeldung:
**29.11.89 Patentblatt 89/48**

(45) Bekanntmachung des Hinweises auf die
Patenterteilung:
**23.06.93 Patentblatt 93/25**

(84) Benannte Vertragsstaaten:
**AT BE CH DE ES FR GB GR IT LI LU NL SE**

(56) Entgegenhaltungen:
**EP-A- 0 215 324**
**FR-A- 2 397 927**
**GB-A- 2 118 096**

(73) Patentinhaber: **Renolit-Werke Gesellschaft mit beschränkter Haftung**
**Postfach 914 Horchheimer Strasse 50**
**W-6520 Worms am Rhein(DE)**

(72) Erfinder: **Thinnes, Klaus Dipl.-Ing.**
**Auf der Rosselshecke 11**
**W-6522 Osthofen(DE)**

(74) Vertreter: **LOUIS, PÖHLAU, LOHRENTZ & SEGETH**
**Kesslerplatz 1 Postfach 3055**
**W-8500 Nürnberg-1 (DE)**

EP 0 343 491 B1

## Beschreibung

Die Erfindung betrifft eine mehrschichtige Oberflächenfolie zum Aufkaschieren auf Kunststoff, Metall, Holz, oder dergleichen (Holzwerkstoffe, Bleche, Stein oder ähnliche Werkstoffe), welche eine Grundfolie aus Polymeren der Methacrylat-Grüppe sowie eine mit dieser flächig verbundene, glasklare Kunststoff-Deckfolie aufweist.

Es ist bekannt, auf die Oberfläche von Gegenständen, z.B. Fensterprofilien, Türen, Gestellen, Gehäusen aus Kunststoff, Holz, Holzwerkstoffen, Metallen oder ähnlichen Werkstoffen eine eingefärbte oder gemusterte Oberflächenfolie aufzubringen, um auf diese Weise zum einen die Oberfläche der Gegenstände gegen schädliche Einflüsse, beispielsweise Korrosion, Verfärbung durch Licht oder mechanische Einwirkung, zu schützen, zum anderen aber unter Umständen auch die Oberfläche ansprechender zu gestalten. Beispielsweise kann durch entsprechend oberflächliche Kaschierung mit einer gemusterten Folie der Eindruck wertvollen Holzes erzeugt werden, auch wenn tatsächlich ein Ausgangsmaterial verwendet wird, das auf Grund seiner Beschaffenheit, Struktur, Oberfläche oder Farbe nicht geeignet wäre. Derartige Oberflächenfolien müssen verschiedenste Anforderungen erfüllen. Mit Klebern verklebt oder ohne Kleber aufkaschiert bieten sie mechanischen Schutz, Schutz vor Angriffen von Agenzien aller Art, z.B. Wasser und Feuchtigkeit, bei Anwendung im Freien, Schutz vor Wetter und Licht.

Für den Bereich von Außenanwendungen werden vielfach spezielle PVC-Folien neben Kombinationen von PVC mit Acrylaten schon verwendet.

Eine mehrschichtige Oberflächenfolie der eingangs erwähnten Art ist aus der FR-A-2 397 927 bekannt. Bei dieser bekannten Folie muß die Verbindung der beiden, das Verbundmaterial bildenden Filme derart erfolgen, daß jeweils auf einen der Filme vor dem Verbinden eine Lösung aus dem den anderen Film bildenden Material aufgebracht und diese Lösung einer Wärmebehandlung unterzogen wird. Das Arbeiten mit solchen Lösungen bereitet Schwierigkeiten, wobei insbesondere die Umweltbelastung zu erwähnen ist. Außerdem sind für ein derartiges Vorgehen aufwendige Maschinen und lange Durchlaufzeiten notwendig. Bei einem Vorgehen gemäß der FR-A-2 397 927 ist es kaum möglich, eine gemusterte Grundfolie mit einer glasklaren Deckfolie zu versehen, weil durch das Verbindungsverfahren die Musterung der Grundfolie leicht beschädigt werden kann und dann das Endprodukt eine von der Musterung der Grundfolie abweichende Musterung aufweist.

Ausgehend von diesem Stand der Technik liegt der Erfindung die Aufgabe zugrunde, die vorstehend aufgezeigten Mängel im Herstellungsverfahren zu vermeiden und insbesondere die Möglichkeit zu bieten, mehrschichtige Folie in einfacher Weise mittels Kalandrierens herzustellen, wobei die Grundfolie selbst in einem Kalander in entsprechender Dicke hergestellt und dann mit der Deckfolie verbunden werden kann.

Zur Lösung dieser Aufgabe wird nach der Erfindung vorgeschlagen, eine eingefärbte und/oder gemusterte Grundfolie vorzusehen, die im wesentlichen aus durch Zusatz von Polybutylacrylat (PBA) flexibilisiertem Polymethylmethacrylat (PMMMA) besteht, wobei von 100 Gew.-Teilen etwa 10 - 50 Gew.-Teile PMMA und etwa 50 - 90 Gew.-Teile PMMA-PBA-Pfropfpolymer sind.

Nur bei Verwendung des erfindungsgemäßen MaterialS für die Grundfolie ist gewährleistet, daß diese auf einem Kalander hergestellt und ohne Probleme mit der Deckfolie verbunden werden kann. Das für die Grundfolie eingesetzte Material kann ohne weiteres auf Kalandern verarbeitet werden.

Die Folie ist gegen Witterungseinflüsse sehr beständig. Polymere der Methacrylat-Gruppe können daneben weitgehend frei pigmentiert werden.

Aus der EP-B-16 226 ist es zwar grundsätzlich bereits bekannt, eine Folie aus unterschiedlichen Polymeren der Methacrylat-Gruppe herzustellen. In dieser Druckschrift ist jedoch die spezielle Zusammensetzung, wie sie Gegenstand vorliegender Erfindung ist, nicht beschrieben.

Zur Erzielung besonderer Eigenschaften können weiterhin dem die Grundfolie bildenden Kunststoff Gleitmittel und/oder Antioxidantien zugesetzt werden.

Als Deckfolie lassen sich bei einer Folie gemäß der Erfindung unterschiedliche Materialien einsetzen, vor allem wegen der UV-Beständigkeit der Polymethacrylate. So kann die Deckfolie zweckmäßig, wie an sich aus der EP-B-16 226 bekannt, eine glasklare Polyacrylat-Folie sein.

Kommt es jedoch auch auf sehr gute mechanische Eigenschaften, z.B. Einreißwiderstand, Schlagzähigkeit, Kratzfestigkeit und Chemikalienbeständigkeit sowie Reinigbarkeit und Lackierbarkeit im Reparaturfalle an, wird in Weiterbildung der Erfindung vorgeschlagen, daß - wie an sich in der FR-A-2 397 927 beschrieben - die Deckfolie eine Polyvinylidenfluorid (PVDF) - oder Polyvinylfluorid (PVF)-Folie ist. Der Einsatz von PVDF- und PVF-Folien ist bezüglich der mechanischen Eigenschaften als hervorragend einzustufen.

Die Verbindung von Polyvinylfluorid- oder Polyvinylidenfluorid-Folien mit Polymethacrylat-Folien ist ohne Schwierigkeiten möglich und man erhält somit den zusätzlichen Vorteil einer weiteren Verbesserung der mechanischen Festigkeit der Oberfläche der erfindungsgemäßen Folie gegenüber den bisher geläufigen Folienaufbausystemen.

Um besonders hervorragende Eigenschaften, d.h. sehr gute Licht- und Witterungsstabilität einerseits und ausgezeichnete mechanische Eigenschaften andererseits zu erzielen, wird schließlich nach der Erfindung vorgeschlagen, daß die Grundfolie mit einer glasklaren Polyacrylat-Deckfolie und diese wiederum mit einer glasklaren Schutzfolie aus PVDF oder PVF abgedeckt ist. Die Polyacrylat-Deckfolie sorgt dann für gute Licht- und Witterungsbeständigkeit, die PVDF- oder PVF-Folie dagegen für hervorragende mechanische Eigenschaften.

Nachstehend soll die Erfindung anhand eines Rezeptur beispiels für die Grundfolie sowie Angaben über die Herstellung und Zusammensetzung der gesamten Folie näher erläutert werden.

Für die Herstellung der Grundfolie kommt z.B. folgende Rezeptur in betracht:

| | |
|---|---|
| Polymethylmethacrylat (PMMA) | 20 Teile |
| Polymethylmethacrylat-Polybutylacrylat-Pfropfpolymer (z.B. "Bärodur E-St-2" der Fa. Chemische Werke München Otto Bärlocher GmbH) | 80 Teile |
| Hochmolekularer Ester als Gleitmittel (z.B. "Bärolub LPM" der Fa. Chemische Werke München Otto Bärlocher GmbH) | 0,20 Teile |
| Paraffinwachs als Gleitmittel (z.B. "Bärolub PA" der Fa. Chemische Werke München Otto Bärlocher GmbH) | 0,20 Teile |
| Antioxidans z.B. Pentaerithryt | 0,30 Teile |

Die Materialien gem. der Rezeptur können in üblicher weise auf Kalanderanlagen und Extrudern verarbeitet werden, wobei z.B. im Prozeß zuerst eine Mischung der Bestandteile der Rezeptur erfolgt. Anschließend wird dann eine Plastifizierung z.B. in Planetwalzenextrudern mit Pufferwalzwerk vorgenommen, woran sich dann das eigentliche Kalandrieren und Extrudieren anschließt. Dabei wird im Extruder mit einer Temperatur von 160 - 200 °C, im Walzwerk mit einer Temperatur von 180 - 200 °C und auf dem Kalander bei ca. 230 °C gearbeitet.

Man erzeugt in diesem Verfahren Folien von unterschiedlicher Stärke, z.B. einer Dicke im Bereich von 60 bis 150 $\mu$m. Ohne Zusatz von Farbstoffen ist die erhaltene Folie ausreichend farblos und transparent, so daß bei späterer Einfärbung keine Farbtonbeeinflussung entsteht. Die Flexibilität der Folie ist für die angestrebten Einsatzgebiete ausreichend.

Folien gemäß der vorstehend erwähnten Rezeptur zeichnen sich vor allem dadurch aus, daß sie bei Lagerung bei erhöhter Temperatur sich nicht verfärben. Die Formstabilität von Folien aus Polymethacrylaten ist gut. Es läßt sich eine Reißfestigkeit von etwa 10 N/mm$^2$ mit einer Dehnung von etwa 40% erreichen. Ein weiterer Vorteil der Folie ist in ihrer guten UV-Beständigkeit zu sehen.

Für sehr viele Anwendungsgebiete ist es erforderlich, die Grundfolie zu bedrucken oder einzufärben. Die Einfärbung kann bei der Grundfolie gem. der Rezeptur mit den unterschiedlichsten Pigmenten erfolgen. Im wesentlichen werden die üblichen organischen Farbstoffe hoher Lichtechtheit eingesetzt. Es ist auch ohne weiteres möglich, anorganische Pigmente zu verwenden, wobei vor allem auch eine lichtechte Einfärbung möglich ist, z.B. durch Verwendung sogenannter Mischoxidpigmente in Verbindung mit z.B. Titandioxid etc..

Sofern eine spezielle Musterung der Oberflächenfolie erwünscht ist, wird diese im allgemeinen durch Bedrucken der Folien vorgenommen. Beispielsweise kann ein Lack folgender Zusammensetzung verwenden werden:

| | |
|---|---|
| Degalan LP 68/04 | 10 Teile |
| Degalan LP 59/93 | 10 Teile |
| Aceton | 30 Teile |
| Butanon | 40 Teile |
| Äthylglykolacetat | 5-10 Teile. |

Bei den Produkten "Degalan" handelt es sich um Erzeugnisse der Degussa AG, Hanau/Main. "Degalan" ist eingetragenes Warenzeichin dieser Firma. Die Grundfolie wird einschließlich Einfärbung und gegebenenfalls Bedrucken fertiggestellt und dann mit der Deckfolie verschweißt.

Als Deckfolie kann, wie erwähnt, glasklares Polyarylat, z.B. ein unter der Typenbezeichnung "Shinkolite HBS 001" von der Firma Mitsubishi Rayon Co. Ltd., Chuo-Ku, Tokyo/Japan angebotenes Erzeugnis verwendet werden. Zur Verschweißung genügen dabei Temperaturen oberhalb 130°C.

Will man dagegen nicht nur gute Wetter- und Lichtbeständigkeit, sondern eine erhebliche Verbesserung der mechanischen Qualität und Beständigkeit gegen Chemikalien, z.B. organische Lösungsmittel, erreichen, so wird entweder statt der Polyacrylat-Folie oder zusätzlich zu dieser auf die Grundfolie noch eine Folie aus einem Fluorpolymer aufgebracht, wobei es sich um coextrudierte Kombinationen handeln kann. Zu diesem Zweck können beispielsweise handelsübliche Folien aus Polyvinylidenfluorid (PVDF) oder Polyvinylfluorid (PVF) verwendet werden, wie sie z.B. seit mehr als 25 Jahren zur Kaschierung von Blechen für Außenanwendungen eingesetzt werden. Die Verschweißung von PVF- bzw. PVDF-Folien mit der Grundfolie kann z.B. auf einer Doubliermaschine bei einer Temperatur von oberhalb 140°C erfolgen, und zwar auch dann, wenn zwischen Grundfolie und PVF- bzw. PVDF-Schutzfolie eine Deckfolie aus Polyacrylat vorgesehen ist.

Hinsichtlich der Abmessungen der einzelnen Folienschichten gilt z.B. folgendes

| Polymethacrylat-Grundfolie pigmentiert mit Acrylatdruck | 120μm |
| Polyacrylat-Folie (Shinkolite HBS 001) | 30μm |
| Fluorpolymer-Schutzfolie (PVDF-Folie transparent | 5-50μm |

```
Aufbau ohne Fluorpolymer-Folie

Grundfolie (w.o.)                           120µm

Polyacrylat-Folie (w.o.)                      55µm


bei Verzicht auf die Polyacrylat-Folie

(Shinkolite) ist folgender Aufbau

möglich           .


Grundfolie (w.o.)                           120µm

PVF- bzw. PVDF-Folie, transparent          25-75µm.
```

Zusammenfassend ist somit festzustellen, daß man bei einem Vorgehen gem. der Erfindung, insbesondere bei dreischichtigem Aufbau, eine Oberflächenfolie erhält, die sich durch sehr gute Licht-, Wärme- und Witterungsstabilität auszeichnet. Sie ist einsetzbar auch in Klimazonen, die bisher üblichen Foliensystemen verschlossen waren, z.B. für Türen, Fassadenelemente, Markisen, Blechteile, Profile, auf Metallen und Kunststoffen verschiedenster Art. Sie ist unempfindlich gegen die meisten Chemikalien, hochschlagzäh, kerbunempfindlich und kratzfest.

**Patentansprüche**

1.  Mehrschichtige Oberflächenfolie zum Aufkaschieren auf Kunststoff, Metall, Holz oder dergleichen, welche eine Grundfolie aus Polymeren der Methacrylat-Gruppe sowie eine mit dieser flächig verbundene, glasklare Kunststoff-Deckfolie aufweist,
    **dadurch gekennzeichnet,**
    dass die Grundfolie eingefärbt und/oder gemustert ist und im wesentlichen aus durch Zusatz von Polybutylacrylat (PBA) flexibilisiertem Polymethylmethacrylat (PMMA) besteht, wobei von 100 Gew.-Teilen etwa 10 bis 50 Gew.-Teile PMMA und etwa 50 bis 90 Gew.-Teile PMMA-PBA-Pfropfpolymer sind.

2.  Oberflächenfolie nach Anspruch 1,
    **gekennzeichnet durch**
    einen Zusatz von Gleitmitteln und/oder Antioxidantien zu dem die Grundfolie bildenden Kunststoff.

**3.** Oberflächenfolie nach Anspruch 1 oder 2,
**dadurch gekennzeichnet,**
dass die Deckfolie eine glasklare Polyacrylat-Folie ist.

**4.** Oberflächenfolie nach Anspruch 1 oder 2,
**dadurch gekennzeichnet,**
dass die Deckfolie eine Polyvinylidenfluorid (PVDF)-oder Polyvinylfluorid (PVF)-Folie ist.

**5.** Oberflächenfolie nach einem der Ansprüche 1 bis 3,
**dadurch gekennzeichnet,**
dass die Grundfolie mit einer glasklaren Polyacrylat-Deckfolie und diese wiederum mit einer glasklaren Schutzfolie aus PVDF oder PVF abgedeckt ist.

## Claims

**1.** Multilayered surface film for laminating onto plastic, metal, wood or the like, which has a base film comprising polymers of the methacrylate group and a crystal-clear plastic top film, bonded over its surface area to the said base film, characterised in that the base film is coloured and/or patterned and substantially comprises polymethyl methacrylate (PMMA) flexibilised by the addition of polybutyl acrylate (PBA), 100 parts by weight being made up of approximately 10 to 50 parts by weight of PMMA and approximately 50 to 90 parts by weight of PMMA-PBA graft polymer.

**2.** Surface film according to Claim 1, characterised by an addition of lubricants and/or antioxidants to the plastic forming the base film.

**3.** Surface film according to Claim 1 or 2, characterised in that the top film is a crystal-clear polyacrylate film.

**4.** Surface film according to Claim 1 or 2, characterised in that the top film is a polyvinylidene fluoride (PVDF) or polyvinyl fluoride (PVF) film.

**5.** Surface film according to one of Claims 1 to 3, characterised in that the base film is covered by a crystal-clear polyacrylate top film and this in turn is covered by a crystal-clear protective film of PVDF or PVF.

## Revendications

**1.** Feuille de surfaçage multicouche pour le recouvrement de résines synthétiques, métal, bois ou analogues, du type se composant d'une feuille de base en polymère du groupe méthacrylate et d'une feuille de recouvrement en résine synthétique transparente reliée superficiellement à la précédente,
caractérisé en ce que la feuille de base est colorée et/ou comporte un motif et est constituée essentiellement par du polyméthacrylate de méthyle flexibilisée par du polyacrylate de butyle, dans une proportion représentant, pour 100 parties en poids, environ 10 à 50 parties en poids de polyméthacrylate de méthyle et environ 50 à 90 parties en poids de polymère greffé polyméthacrylate de méthyle/polyacrylate de butyle.

**2.** Feuille de surfaçage selon la revendication 1, caractérisé en ce que la résine synthétique formant la feuille de base contient additionnellement des lubrifiants et/ou des antioxydants.

**3.** Feuille de surfaçage selon les revendications 1 ou 2, caractérisé en ce que la feuille de recouvrement est une feuille transparente de polyacrylate.

**4.** Feuille. de surfaçage selon les revendications 1 ou 2, caractérisé en ce que la feuille de recouvrement est une feuille de polyfluorure de vinylidène ou de polyfluorure de vinyle.

**5.** Feuille de surfaçage selon les revendications 1 à 3, caractérisé en ce que la feuille de base est recouverte par une feuille de recouvrement transparente en polyacrylate et celle-ci à son tour est recouverte par une couche de protection transparente en polyfluorure de vinylidène ou de polyfluorure

de vinyle.